# EUROPEAN PATENT SPECIFICATION

(11) **EP 3 168 494 B1**
(45) Date of publication and mention of the grant of the patent: **20.06.2018**
(21) Application number: 16191094.8
(22) Date of filing: 28.09.2016
(51) Int. Cl.: F16F 15/12, F16F 15/131

(54) **MANUFACTURING PROCESS OF A FLYWHEEL AND RELEVANT FLYWHEEL**
PROZESS ZUR HERSTELLUNG EINES SCHWUNGRADES UND ENTSPRECHENDES SCHWUNGRAD
PROCÉDÉ DE FABRICATION DE VOLANT ET VOLANT CORRESPONDANT

(30) Priority: 14.10.2015 IT UB20154674
(43) Date of publication of application: 17.05.2017
(73) Proprietor: Bora S.r.l., 60030 Maiolati Spontini (AN) (IT)
(72) Inventor: BORA, Elio, 60030 Maiolati Spontini (AN) (IT)
(74) Representative: Cutropia, Gianluigi

(56) References cited:
- EP-A1- 1 707 843
- DE-A1-102010 020 585
- DE-B4- 4 143 681

## Description

The present patent application for industrial invention relates to a manufacturing process of a flywheel in particular for motor vehicles.

A flywheel is a mechanical device used to limit the excess of motive power on total mechanical work, or vice versa the excess of total mechanical work on motive power in periodically operated machines in order to increase the uniformity of the angular speed of the drive shaft. The flywheel is shaped as a wheel or a disk with a central hub intended to be applied on a shaft. The disk of the flywheel is suitably shaped to increase the moment of inertia of the shaft to which the flywheel is applied.

Flywheels are currently manufactured by means of pressing or casting.

With reference to mass production, pressing allows for obtaining a better surface of the finished part, better mechanical characteristics and a narrower geometrical and dimensional tolerance. Nevertheless, the production of a flywheel by pressing is currently impaired by several drawbacks.

The central hub of the flywheel must be produced separately from the disk of the flywheel and must be welded to the disk of the flywheel during a separate operation. Welding generally impairs the mechanical characteristics of the finished part because it modifies the stress conditions of the material in the areas subject to thermal stress. Moreover, this operation significantly increases production time and costs.

The disk of the flywheel should be provided with different planes. However, with traditional pressing systems it is extremely difficult to adjust the flow of the pressing material. Consequently, the planes of the disk of the flywheel are not made with accuracy and precision.

EP1707843 discloses a flywheel comprising a disk and a central hub obtained in one piece with the disk by means of extrusion.

DE4143681 discloses a flywheel comprising a first flywheel mass intended to be fixed on an internal combustion engine and a second flywheel mass intended to be coupled or uncoupled with or from a reducer.

DE102010020585 discloses a torsional damper comprising a protection cover to reinforce the pressurization areas, and compression springs supported by said cover.

The purpose of the present invention is to eliminate the drawbacks of the prior art by disclosing a manufacturing process for a flywheel that is efficient, efficacious, precise and capable of obtaining an especially performing flywheel.

Another purpose of the present invention is to disclose such a manufacturing process of a flywheel that is practical, versatile, automated and controlled, inexpensive and simple to make.

These purposes are achieved by the present invention with the characteristics of the independent claim 1.

Advantageous embodiments will appear from the dependent claims.

In order to obtain the flywheel according to the invention:
1. a suitable sequence of operations has been defined. The sequence of cutting, drilling, forming, coining and extrusion operations represents the method used for modeling the finished part.
2. Specific shapes of punches and dies were defined in the areas that are subject to geometrical tolerance. The final shape of dies and punches in critical areas was obtained considering the deformation capability of the material and the need to obtain a flow of material from the areas where no special tolerance is required to the areas where accumulation of material is necessary.
3. Different lubrication techniques were used during the most critical working steps to reduce the temperature, wear and number of surface defects on the flywheel.
4. Maintenance was used during the extrusion operations to reduce the wear of the equipment and the number of surface defects in the flywheels.
5. The central hub is obtained by means of an extrusion process. This solution avoids welding the hub during a later step, thus reducing the thermal stress on the material, the residual stress caused by thermal dilatation, the geometrical irregularities related to the presence of the welding seam and the total working time. However, this is a critical operation of the production cycle because of the high deformation and temperature gradients formed in the radiuses of the edge on the hub. The hub can be extruded by using a special ogive-shaped punch and suitable lubrication oil.

It must be considered that the changes to the geometry of the finished flywheel are only made in the areas where no special geometrical and/or dimensional tolerance is present, i.e. in the areas wherein the designer is allowed certain freedom by the customer.

Moreover, the designer had to consider that the number of pieces to be produced by the mold throughout its useful life must be higher than one million flywheels, with the necessary tolerance.

Additional features of the invention will appear evident from the detailed description below, which refers to a merely illustrative, not limiting embodiment, as illustrated in the attached figures, wherein:
Fig. 1 is a perspective view of the flywheel according to the manufacturing process of the invention
Fig. 2 is a top view of the flywheel of Fig. 1;
Fig. 3 is an axial sectional view taken along the sectional planes III-III of Fig. 2;
Fig. 4 is a sectional view of a detail of the flywheel taken along the sectional plane IV-IV of Fig. 2
Fig. 5 is a block diagram that diagrammatically shows the installation used to manufacture the flywheel according to the invention;
Figs. 6 to 9 are perspective views, respectively showing the parts coming out from the first four stations of the installation of Fig. 5
Figs. 10 and 11 are sectional views, respectively showing a punch and a plug of the die of the fourth station (S4) of the installation of Fig. 5,
Figs. 12, 13 are perspective views, respectively showing the parts coming out from the last station of the installation of Fig. 5;
Fig. 14 is a side view of the last station (S7) of the installation of Fig. 5; and
Fig. 15 is a cross-section view takes along the sectional plane XV-XV in Fig. 14.

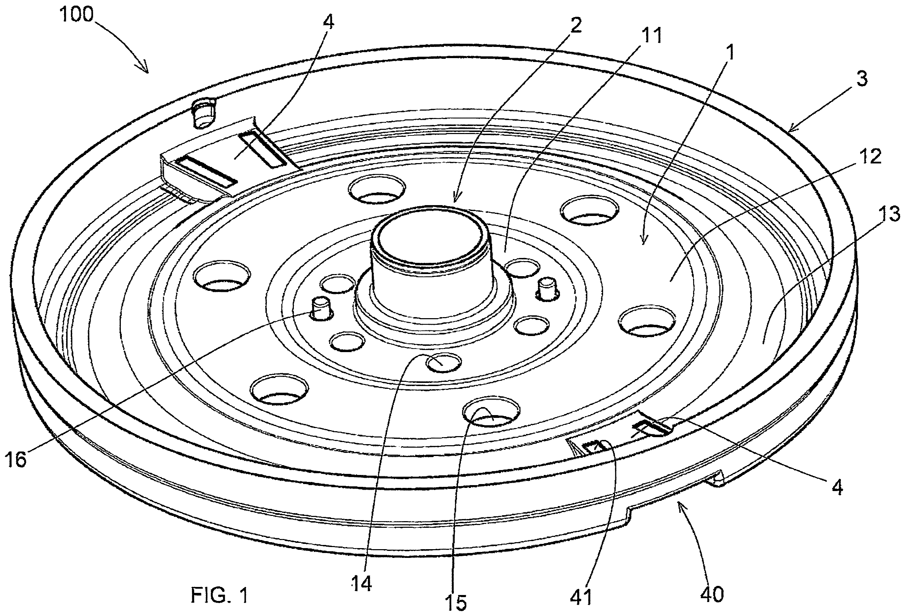

With reference to Figures 1 to 3, the finished flywheel according to the manufacturing process of the invention is disclosed, which is generally indicated with reference numeral (100). The flywheel (100) comprises:
- a disk (1) with a central hole (10) with center (O), an internal surface (1a) and an external surface (1b);
- a central hub (2) with cylindrical shape disposed in the center of the disk (1) and protruding from the internal surface (1a) of the disk;
- a peripheral edge (3) with cylindrical shape that protrudes from the disk (1) in the same direction as the central hole (2).

The central hole (2) is disposed around the central hole (10) of the disk in such manner that the central hub has an axis (A) passing through the center (O) of the hole of the disk. The central hub (2) protrudes from the disk (1) to receive a shaft.

The disk (1) comprises three concentric portions with toroidal shape (11, 12, 13), namely:
- a central portion (11) extending around the central hub (2),
- an intermediate portion (12) extending around the central portion,
- a peripheral portion (13) extending around the intermediate portion.

With reference to the internal surface (1a) of the disk, the central portion (11) is flat, the intermediate portion (12) is flat and raised with respect to the central portion (11) and the peripheral portion (13) is lowered and recessed with respect to the intermediate portion (12). In fact, the peripheral portion (13) must define a toroidal housing to receive springs that are not shown in the figures.

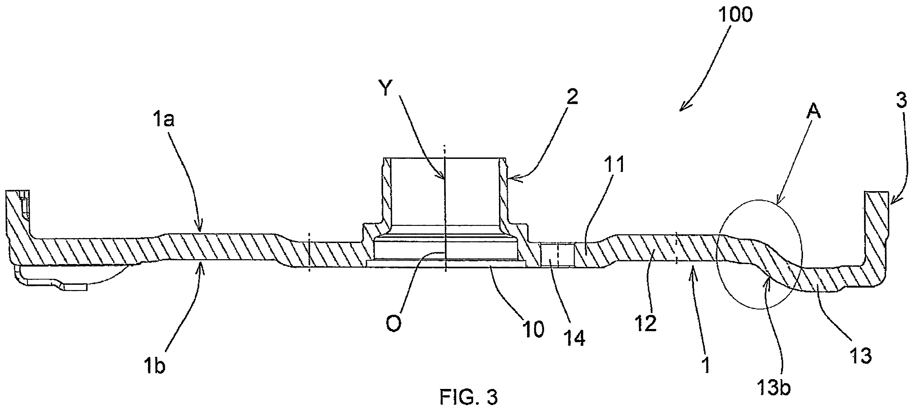

With reference to Fig. 3, the external surface (1b) of the disk is provided with a curved joining portion (13b) that is shown inside the broken circle (A). The curved joining portion (13b) joins the intermediate portion (12) with the peripheral portion (13) of the disk.

In the intermediate portion (12) of the disk six first holes (15) are obtained and equally spaced angularly along a circumference. The first holes (15) receive gear shafts, such as for example satellite gears of epicycloid reduction gears.

In the central portion (11) of the disk six second holes (14) are obtained and equally spaced angularly along a circumference. The second holes (14) receive screw means used to fix the flywheel (100).

The first holes (15) have a higher diameter than the second holes (14).

Two pins (16) protrude from the internal surface (1a) of the central portion (11) of the disk in the same direction as the central hub. The pins (16) are disposed in diametrally opposite positions and are used to center the flywheel (100).

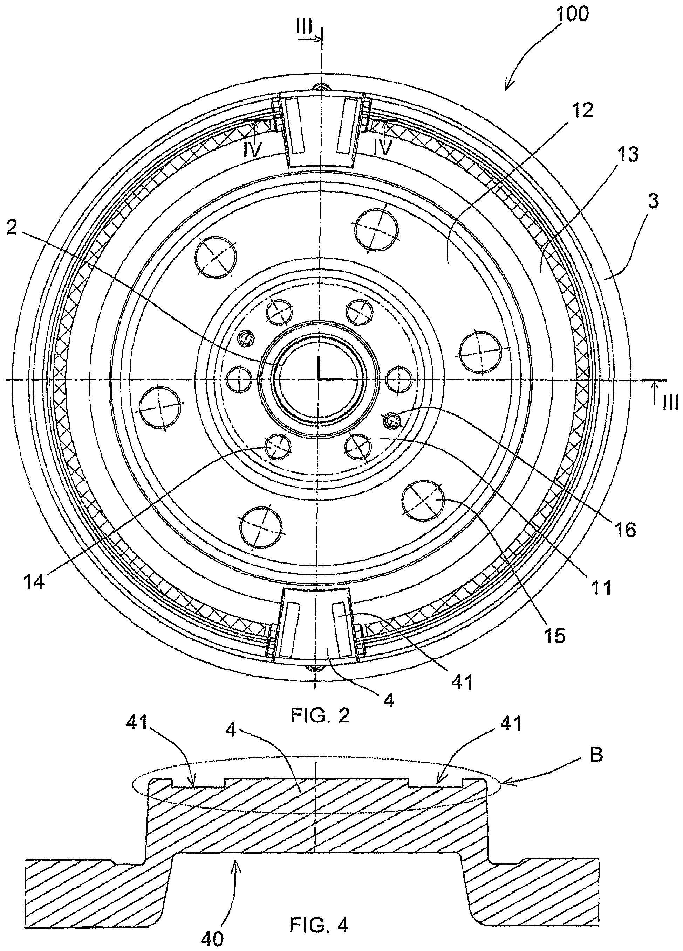

With reference also to Fig. 4, two projections (4) are obtained in the peripheral portion (13) of the disk, protruding inwards and defining outwards-facing housings (40). The projections (4) are disposed in diametrally opposite directions. The projections (4) have a trapezoidal shape, i.e. the projections (4) are tapered with decreasing dimensions going towards the center of the flywheel. Two rectangular grooves (41) are obtained on each projection (4) with substantially radial direction. The projections (41) are used for fixing the reduction gear disposed inside the flywheel or for fixing the housings for the springs.

In the flywheel (100) holes (10, 14, 15) are present, which need to be coined in order to eliminate burrs.

Moreover, special attention has been paid in making the surfaces of the curved joining portion (13b) (shown in the circle (A) of Fig. 3) which joins the intermediate portion (12) with the peripheral portion (13) of the disk and the upper surface of the projecting portions (4) (shown in the ellipsis (B) of Fig. 4)

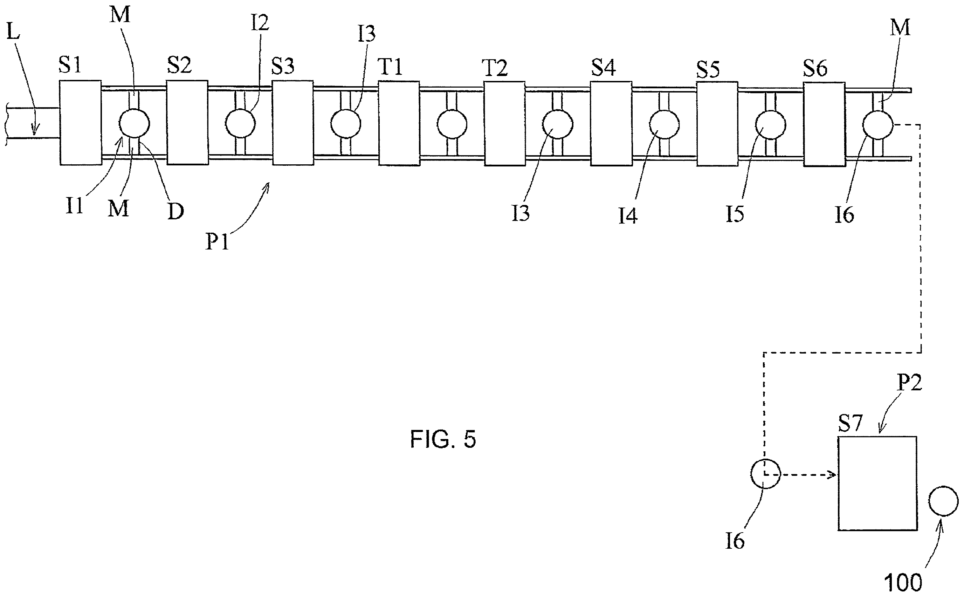

Fig. 5 shows the installation used to obtain the finished flywheel (100). Such an installation comprises seven stations (S1, S2, S3, S4, S5, S6, S7) with different molds, wherein different working operations are made.

The first six molds of the first six stations (S1-S6) are mounted in a sequential way on the same horizontal mechanical transfer press, which is defined as "transfer press" (P1) and the semi-finished parts (I1, I2, I3, I4, I5; I6) coming out from the stations (S1-S6) of the transfer press are transferred from a mold to the next mold in indexed mode by means of automatic transfer grippers (M).

The transfer press (P) comprises a lower base and an upper base that moves at every forward-traveling step of the press. In each station (S1, S6) of the transfer press, dies are mounted in the lower base and punches are mounted in the upper base.

At least one stop station (T1), preferably two stop stations (T1, T2) are inserted between the third station (S3) and the fourth station (S4), wherein the part (I3) coming out from the third station (S3) suffers no deformation. The stop stations (T1, T2) are used to balance the stress on the transfer press (P1) and distribute the load in the most uniform way possible.

The grippers (M) are used to move the semi-finished parts (I1-I5). The grippers (M) are equipped with a position sensor (D) that detects the presence of the part and gives the authorization to tighten the grippers and move the gripper with the part.

The last working station (S7) is provided in a second press (P2) that is separated from the transfer press (P1). In fact, the last operation is not carried out together with the previous six operations, but in a separate autonomous second press (P2). This choice has been made because the transfer press (P1) can also be used to make other types of flywheels that have the first six operations in common with the flywheel of the invention (100), but are characterized by substantial differences for what regards the last mold. By placing the molds in this way, it is possible to standardize the first six operations, only differentiating the last operation.

The following steps are made to obtain the finished flywheel (100):
a. cutting the disk (1) from a sheet metal (L) and drilling the central hole (10) and the first holes (15),
b. preforming the concentric portions (11, 12, 13) of the disk and preforming the peripheral edge (3),
c. preforming the area of the central hub (2),
d. forming the peripheral edge (3),
e. drilling the second holes (14),
f. coining the holes (10, 14, 15) and extruding the pins (16),
g. extruding the central hub (2).

### Step (a)

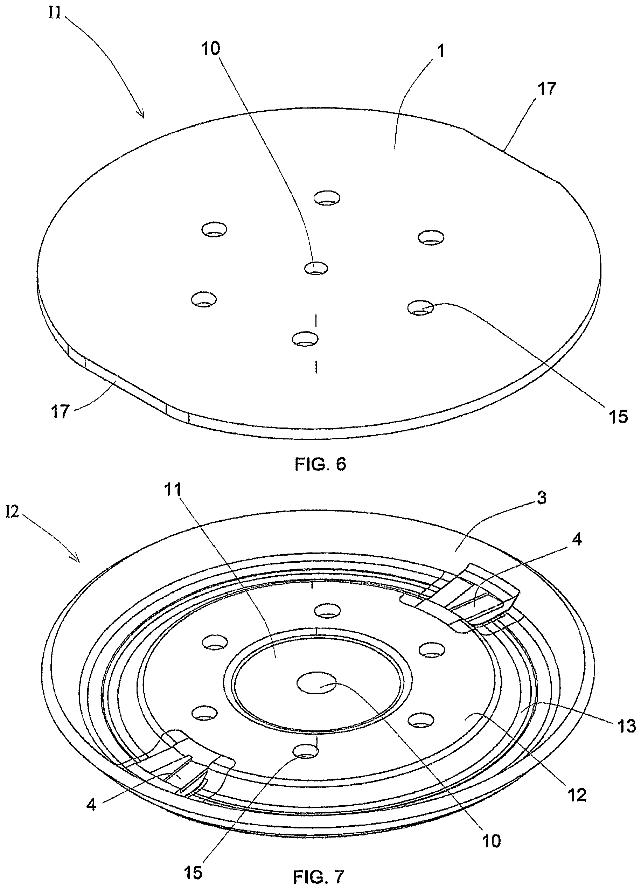

The first operation that is necessary to obtain the finished part is cutting a sheet metal (L) by means of the first station (S1) of the transfer press (P1) that produces the part (11) shown in Fig. 6.

The sheet metal (L) is cut by making shaped blades move forward with respect to a die that is joined to the lower base of the press. The blades are fixed to a blade-holder support by means of threaded connections.

In order to prevent the sheet metal (L) from being pressed excessively under its weight, the first station (S1) comprises a lifting device that supports the sheet metal (L) by means of a pneumatic cylinder. The forward travel of the sheet metal (L) through the mold of the first station (S1) is helped by the provision of ball bearings.

In order to obtain a good cutting quality, the first station (S1) is provided with a holding-down device composed of a holding-down plate that holds the sheet metal while the blades are lowered. The force of the holding-down device is given by nitrogen cylinders that connect the holding-down device to the upper base of the press. In such a way, a disk is cut with two rectilinear edges (17) in diametrally opposite positions wherein the projections (4) are to be obtained.

Together with cutting, in the first station (S1) a central hole (10) and six first holes (15) are drilled, which are to be provided in the intermediate portion (12) of the finished part. The drilling of the holes (10, 15) is obtained with a relative motion of punches and dies. The drilling action is simultaneous to the cutting action.

After cutting and drilling, the semi-finished part (11) is brought to a height that can be reached by the transfer grippers (M) by means of two spring extractors. The waste of the cutting and drilling operations is ejected from two slides ending outside the mold of the first station (S1).

### Ste (b)

In the second station (S2) the preshaping or preforming step of the concentric portions (11, 12, 13) of the disk and of the peripheral edge (3) is made. Fig. 7 shows the part (I2) that comes out from the second station (S2). The part (I2) has a central flat portion (11) around the central hole (10), an intermediate portion (12) that is flat and raised with respect to the central portion (11), a peripheral portion (13) that is lowered and recessed with respect to the intermediate portion (12), two projections (4) disposed in diametrically opposite position in said peripheral portion (13) in correspondence of said opposite linear edges (17), and a peripheral truncated-conical edge (3) that protrudes from the peripheral portion (13). The first holes (15) are in the intermediate portion (12).

The mold of the second station (S2) comprises a lower die and an upper punch. The lower die is formed by a fixed part that is joined to the lower base of the press and by a central mobile part that slides along the vertical axis of the mold. The mobile part of the die is connected to three nitrogen cylinders that provide a suitable force when forming the sheet metal.

Also the upper punch comprises a fixed part, which is anchored to the upper base of the press, and a mobile part that is connected to a nitrogen cylinder. The combined action of the mobile part of the lower die and of the mobile part of the upper punch allows for obtaining the profile shown in Fig. 7 of the semi-finished part (I2) and lift the part when the deformation step is completed.

The projections (4) in the left-hand and right-hand area of the semi-finished part (I2) are formed by means of plugs disposed on the lower die and on the upper punch. Both the die and the punch discharge on a reaction plate able to withstand the high loads created during forming. In order to ensure the correct centering of the part to be machined, pins are provided on the die and on the punch, using the holes (10, 15) drilled during the previous operation.

The deformation step of the sheet metal is made easier by the presence of lubricant oil pressurized by the mobile part of the die that is pushed by the motion of the press. The same holes of the die that let the lubrication oil pass are also used to eject the air contained between the part to be machined and the die. The die comprises an oil collection barrier disposed around the die to convey the lubricant oil that comes out from the die.

### Step (c)

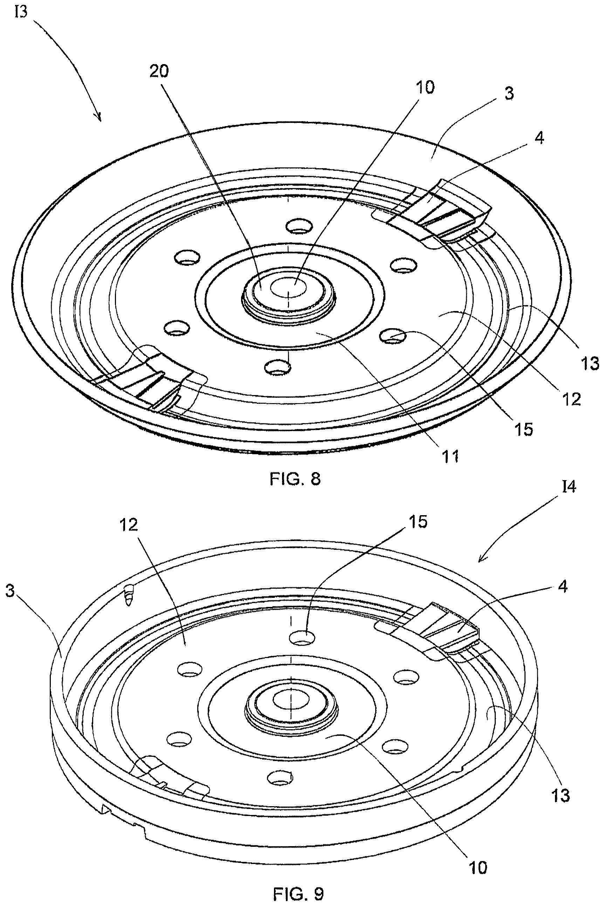

In the third station (S3) the central area of the disk (1) of the flywheel is preformed in order to prepare the part for extruding the hub. Fig. 8 shows the part (I3) that comes out from the third station (S3). The part (I3) has a central cylindrical shank (20) obtained by means of preforming.

In the station (S3) the die of the mold comprises an external mobile part that is basically used to provide a solid base to the part during the operation, and a part joined to the press that provides forming. Also the punch comprises a mobile part and a fixed part. The internal parts of the die and of the punch are fixed by means of threaded connections respectively to the lower base and to the upper base of the press. The external parts of the die and of the punch act as holding-down device for the sheet metal and are responsible for controlling the flow of material from the idle area to the area to be deformed.

In order to ensure a correct deformation and decrease the temperature of the part, lubricant oil is provided and collected by a suitable barrier disposed around the die. The motion of the external parts of the die and of the punch acting as holding-down device is controlled by suitable nitrogen cylinders.

To ensure the perfect axial motion of the mobile part of the mold, during the forming step of the cylindrical shank (20), the mold comprises four columns fixed with bushes on the lower base of the press. When the upper base of the press is lifted again, the nitrogen cylinders bring the semi-finished part (I3) to such a position that it can be taken by the transfer grippers (M).

The semi-finished part (I3) coming out from the third station (S3) is transferred to two stop stations (T1, T2) wherein it does not undergo any working operation because in the stop stations (T1, T2) the transfer press (P1) does not need to overcome any resisting force and this allows balancing the high forces that are suffered in the adjacent stations.

### Step (d)

The forming of the peripheral edge (3) is completed in the fourth station (S4). Fig. 9 shows the part (I4) that comes out from the fourth station (S4). The part (I4) has a perfectly cylindrical peripheral edge (3).

The semi-finished part (I4) is positioned by the transfer grippers (M) on hoists actuated by nitrogen cylinders. Now the press starts the descending phase. The die of the mold is formed of a fixed external part and a vertically mobile internal part.

The punch is formed of a fixed internal part and a mobile external part. The fixed part of the punch is designed in such manner that it can be replaced and provides a stop surface for the part to be deformed. The mobile part of the punch is connected at the upper base of the press by means of nitrogen cylinders. The main function of the external part of the punch is to extract the part from the die.

Both the die and the punch discharge the high forces they are subject to during the working operation on reaction plates that are made of suitably treated material.

When the part to be formed is positioned on the two hoists, the press starts the descending travel until the hoists go back to their housings and the part to be machined (I4) comes in contact with the mobile part of the die. Now the external part of the punch is stopped against spacers positioned around the die and the mobile punch starts pushing the central part of the part to be deformed downwards.

When the forming of the peripheral edge (3) of the part is completed, the press starts the ascending travel. In this step the deformed part (I4) is lifted together with the punch and the die until it stops against an upper extractor that removes the part (I4) from the punch. Now the extractors separate the part (I4) from the die and bring it to a suitable height so that the transfer grippers (M) can move it to the next station (S5).

In order to ensure a correct deformation, lubricant oil is provided and collected by a suitable barrier disposed around the die.

The shape of the mold of the fourth station (S4) is designed in such manner to obtain the requested tolerance. In particular, to obtain the joining portion (13b) shown in the circle (A) of Fig. 1, it was necessary to modify the shape and the radius of the edge of the punch in such manner that the material was deformed correctly and filled the die completely, ensuring the geometrical and dimensional tolerance of the external surface (1b) of the disk of the flywheel.

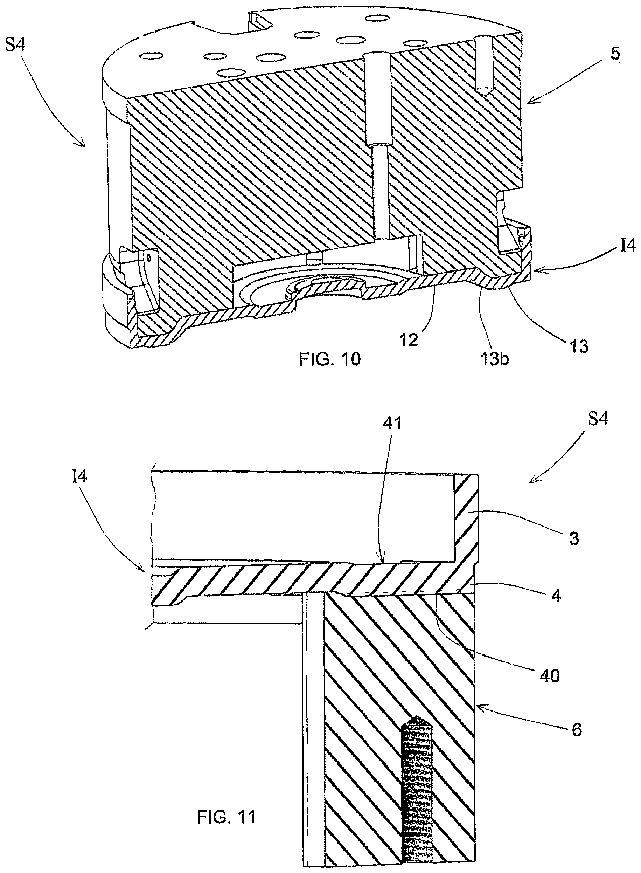

Fig. 10 shows a punch (5) of the mold of the fourth station (S4) disposed above the part (I4) that is being machined.

A modification was made in the mold of the fourth station (S4) to obtain the upper surface of the projections (4), as shown in the ellipsis (B) of Fig. 4.

With reference to Fig. 11, in order to have sufficient material to ensure geometrical tolerance, on the upper surface of the projections (4) the freedom allowed in the lower housing (40) of the projections (4) was used, suitably shaping a lower plug (40) of the die of the mold in such manner to push more material in the upper part of the projections (4) of the flywheel.

Preliminary calculations were made by designers in order to obtain the suitable profiles of the plugs (6) and the punch (5) and experimental tests were made to validate the theoretical calculations and determine a profile functional to the requested shape.

### Step (e)

The station (S5) is used to drill the six second holes (14) in the central portion (11) of the disk of the flywheel, and to enlarge the central hole (10) and the first holes (15).

Fig. 11 shows the part (I5) that comes out from the fifth station (S5).

The part (I4) coming from the previous operation is positioned by the grippers (M) on two hoists that have the double function of extracting the part from the drilling die and centering the part for a correct positioning. In order to ensure that the profile of the working operations made on the part (I4) is sufficiently defined, a holding-down plate is provided to block the part (I4) in correspondence of the drilling areas in the mold of the station (S5). Holes are obtained on the holding-down plate in correspondence of the punches of the die of the station (S5) in order not to create interference during the drilling step.

The holding-down plate is connected to the upper base of the press by means of nitrogen cylinders that are suitably dimensioned to provide a sufficient force to completely block the sheet metal and shoulder screws with ground spacer to ensure an end-of-travel position.

In order to ensure that the working scrap is extracted correctly from the die, the punches are provided with an extractor that pushes the removed material inside the die. The drilling step is completed when the holding-down plate is stopped on spacers fixed on the die-holding base of the press.

### Step (f)

In the sixth station (S6) the holes (10, 14, 15) drilled in the previous operation are coined and the two pins (16) provided in the central portion (11) of the disk of the flywheel are extruded.

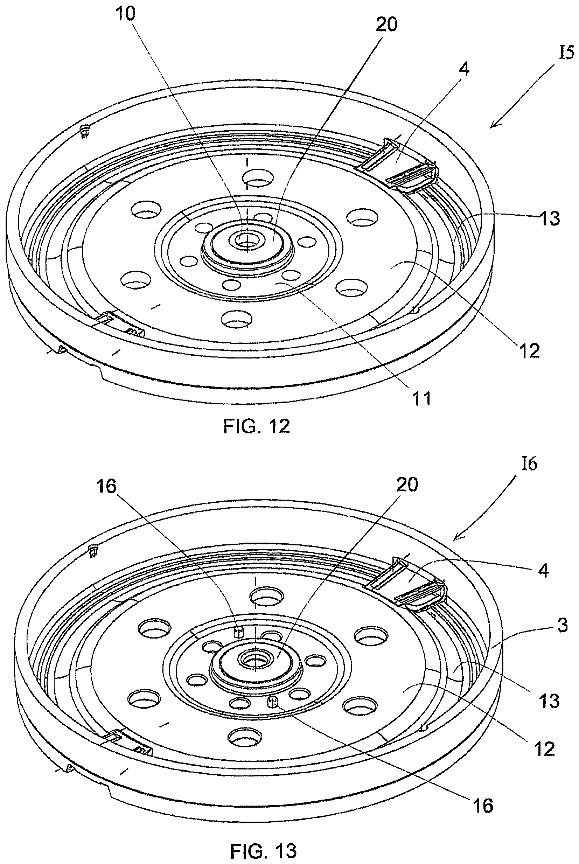

Fig. 13 shows the part (I6) that comes out from the sixth station (S6).

The function of the coining operation is to eliminate the burrs on the edges of the holes (10, 14, 15). In order to ensure a correct positioning of the part to be coined, the sixth station (S6) comprises four centering members that are stopped against the peripheral edge (3) of the semi-finished part (I5). By means of the grippers (M) the part (I5) is brought in correspondence of four hoists that are used to correctly position the part (I5) inside the mold of the sixth station (S6).

The sixth station (S6) also comprises two centering hoists that are suitably shaped in order to be perfectly engaged inside the housings (40) of the part. The centering hoists are provided with sensors that give permission to the press in order to start the descending travel.

A holding-down plate is fixed on the upper base of the press and housings are obtained on the holding-down plate for upper coining punches, for ejectors and for dies for extruding the pins.

The ejectors are punches that are stopped against a reaction plate of the mold of the station (S6) by means of helical springs and are used to extract the part from the dies after extruding the pins (16) of the flywheel.

When the sensors give permission to the press, the upper base of the press starts the descending travel until the hoists provided on the lower die-holding plate are lowered completely. Now the compression of the six nitrogen cylinders that connect the die-holding plate to the lower base of the press is started and the coining step is made. Simultaneously, the forward travel of the dies causes the extrusion of the pins (16) of the flywheel and the compression of the springs of the upper ejectors of the mold of the sixth station (S6).

When this step is completed, the press starts the ascending travel, the cylinders of the die-holding plate are expanded until they reach the maximum travel, the ejectors on the upper base have no longer a force that tends to compress them and are expanded until the part (I6) is extracted from the extrusion dies. When the part (I6) is separated from the upper holding-down plate, the hoists bring the semi-finished part (I6) back to the starting height. In this position the grippers (M) can grab the part.

### Step (g)

The part (I6) coming out from the last station (S6) of the transfer press (P1) is brought to the second press (P2). In the station (S7) of the second press (P2) the central hub (2) of the flywheel is extruded.

This operation is made in the station (S7) disposed on the second press (P2) separated from the transfer press (P1).

The part (I6) is positioned on a die of the mold of the station (S7) and is centered using the holes drilled in the previous operations to obtain a correct centering. Said die is shaped in such manner to perfectly receive the part (I6) to be machined.

When the part (I6) is in the correct position, the press (P2) starts the descending travel. To deform the part (I6) correctly, a holding-down plate is provided in the upper portion of the mold to block the part to be machined.

On the lower base of the press (P2) four columns are fixed to ensure that the relative motion between the upper part and the lower part of the mold is perfectly vertical.

To extrude the central hub (2) of the flywheel, an ogive-shaped punch is fixed to the upper base of the press (P2) by means of threaded connections. The lowering of the upper base of the press causes the deformation of the central portion of the part (I6) and the extrusion of the central hub (2). Since the punch is subject to tear and wear, the punch can be replaced. In fact, the punch is fixed to a support structure by means of a tap bolt.

During the deformation of the part (I6), the temperature of the part (I6) tends to increase; therefore, in order to avoid overheating the material of the part (I6) excessively, the mold of the station (S7) works in an ordinary lubricant oil bath.

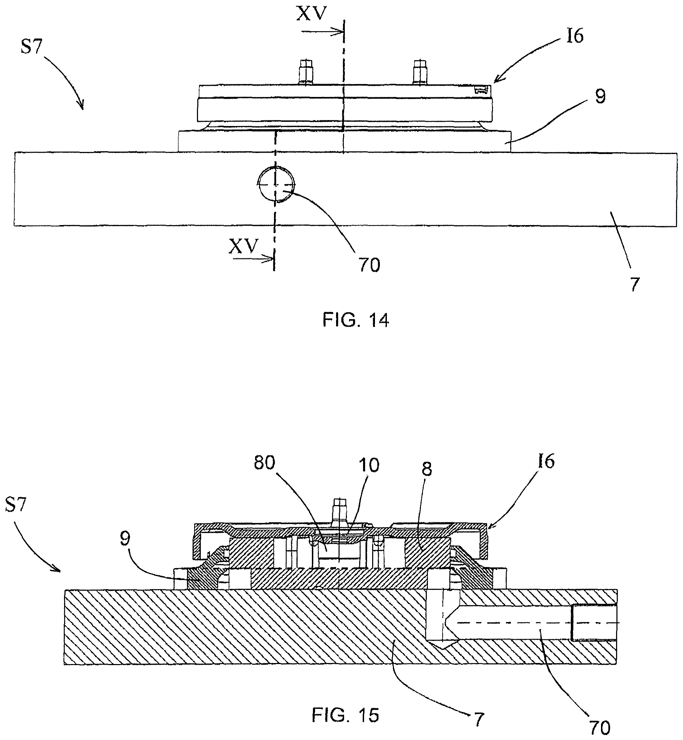

Figs. 14 and 15 show the part (I6), which is disposed above a die (8) disposed above a lower base (7). The die has a chamber (80) in correspondence of the central part of the disk of the flywheel wherein the central hub is to be extruded.

The oil is introduced in the chamber (80) of the die through a conduit (70) obtained in the lower base. The oil is pressurized in the chamber (80) of the die. Since the part (I6) has the central hole (10), lubricant oil leaks through said central hole (10) towards the external surface of the part to be machined.

When the part is in the correct position, the operator starts the descending travel of the press. During the deformation of the part, the oil keeps on leaking around the extrusion area, thus lowering the temperature, reducing the wear of the punch and the formation of surface defects on the flywheel.

The oil that comes out of the die (8) is collected by means of a rectangular sheet metal (9) that surrounds the mold and is conveyed through an outlet hole into a decantation tank that is intended where any residues and impurities can sediment down before reintroducing the oil in the circuit.

This step provides for a special maintenance of the ogive-shaped punch because the extrusion of the central hub is a critical operation. In particular, the operator must polish the ogive of the punch manually with steel wool every two machined parts in order to ensure the quality of the molded parts and the duration of the mold.

The finished part consisting in the flywheel (100) shown in Figs. 1 - 3 comes out from the station (S7) of the second press (P2).

Numerous variations and modifications can be made to the present embodiment of the invention, which are within the reach of an expert of the field, falling in any case within the scope of the invention as disclosed by the attached claims.

## Claims

1. Manufacturing process of a flywheel (100) comprising the following steps:
a) cutting and drilling a sheet metal (L) to obtain a first semi-finished part (11) composed of a disk (1) having a central hole (10) and a plurality of first holes (15) that are equally spaced along a circumference,
b) preforming the disk (1) of the first semi-finished part (11) to obtain a second semi-finished part (I2) with a central flat portion (11) around the central hole (10), an intermediate flat portion (12) that is raised with respect to the central portion (11), a peripheral portion (13) that is lowered with respect to the intermediate portion (12), two projections (4) disposed in diametrically opposite position in said peripheral portion (13), a peripheral truncated-conical edge (3) that protrudes from the peripheral portion (13), wherein said first holes (15) are in the intermediate portion (12),
c) preforming the central portion (11) of the second semi-finished part (I2) to obtain a third semi-finished part (I3) with a cylindrical shank (20) in central portion (11) around the central hole,
d) forming the peripheral edge (3) of the disk of the third semi-finished part (I3) to obtain a fourth semi-finished part (I4) with peripheral cylindrical edge (3),
e) drilling the disk of the fourth semi-finished part (I4) to obtain a fifth semi-finished part (I5) with a plurality of second holes (14) that are equally spaced along a circumference in said central portion (11) of the disk,
f) extrusion of two pins (16) in the central portion (11) of the disk (1) to obtain a sixth semi-finished product (I6) with the coined holes (10, 15, 14) and two pins (16) that protrude in the central portion (11) of the disk, and
g) extruding said central shank (20) of the sixth semi-finished part (I6) to obtain the finished flywheel (100) comprising a central hub (2) obtained from extruding said central shank (20) of the disk,
**characterized in that**
said disk (1) of the first semi-finished part (11) comprises two opposite linear edges (17),
the two projections (4) of the second semi-finished part (I2) are disposed in correspondence of said opposite linear edges (17) of the disk (1) of the first semi-finished part (I1), and
said extrusion step (f) also provides for coining said central hole (10), first holes (15) and second holes of said fifth semi-finished part (I5).

2. The process of claim 1, wherein the steps from (a) to (f) are made sequentially by means of six stations (S1, S2, S3, S4, S5, S6) of a transfer press (P1) and the step (g) is made by means of a second press (P2) separated from the transfer press.

3. The process of claim 2, wherein said extrusion step (g) of the central shank is made by means of said second press (P2) that comprises a die (8) and an ogive-shaped punch.

4. The process of claim 3, also comprising a polishing step of the ogive of the punch of said second press every two parts machined by said second press (P2).

5. The process of claim 3 or 4, wherein said extrusion step (g) of the central shank provides for introducing lubricant oil in a chamber (80) of said die of the second press (P2).

6. The process of any one of the preceding claims, wherein said forming step (d) of the peripheral edge (3) of the disk also provides for forming a curved connection portion (13) between the intermediate portion (12) and the peripheral portion (13) of the disk.

7. The process of any one of the preceding claims, wherein said forming step (d) of the peripheral edge (3) of the disk also provides for forming the upper surface of said two projections (4) of the peripheral portion of the disk.

8. The process of any one of the preceding claims, wherein at least one of said steps (b, c, d, e, f) provides for introducing lubricant oil on the part that is being machined.

9. The process of any one of claims 2 to 8, wherein at least one stop station (T1, T2) is inserted between the third station (S3) and the fourth station (S4) of the transfer press, wherein the part (I3) coming out from the third station (S3) suffers no deformation.

## Patentansprüche

1. Verfahren zur Herstellung eines Schwungrades (100) umfassend folgende Schritte:
a) Stanzen und Lochen eines Bleches (L), um ein erstes Halbfertigteil (11) zu erhalten, bestehend aus einer Scheibe (1), die ein mittleres Loch (10) und eine Mehrzahl von ersten Löchern (15) aufweist, die längs eines Umfangs gleichmäßig voneinander beabstandet sind,
b) Vorformen der Scheibe (1) des ersten Halbfertigteils (I1), um ein zweites Halbfertigteil (I2) zu erhalten, das einen flachen, mittleren Abschnitt (11) rund um das mittlere Loch (10), einen gegenüber dem mittleren Abschnitt (11) erhöhten, flachen Zwischenabschnitt (12), einen gegenüber dem Zwischenabschnitt (12) vertieften, peripheren Abschnitt (13), zwei Auskragungen an diametral entgegengesetzten Positionen auf dem peripheren Abschnitt (13) und einen kegelstumpfförmigen, peripheren Rand (3) aufweist, der aus dem peripheren Abschnitt (13) auskragt, wobei die ersten Löcher (15) sich im Zwischenabschnitt (12) befinden,
c) Vorformen des mittleren Abschnitts (11) des zweiten Halbfertigteils (I2), um ein drittes Halbfertigteil (I3) zu erhalten, das einen zylindrischen Schaft (20) im mittleren Abschnitt (11) rund um das mittlere Loch aufweist,
d) Formen des peripheren Randes (3) der Scheibe des dritten Halbfertigteils (I3), um ein viertes Halbfertigteil (I4) zu erhalten, das einen zylindrischen, peripheren Rand (3) aufweist,
e) Lochen der Scheibe des vierten Halbfertigteils (I4), um ein fünftes Halbfertigteil (I5) zu erhalten, das eine Mehrzahl von zweiten Löchern (14) aufweist, die längs eines Umfangs in dem mittleren Abschnitt (11) der Scheibe gleichmäßig voneinander beabstandet angeordnet sind,
f) Extrudieren von zwei Stiften (16) im mittleren Abschnitt (11) der Scheibe (1), um ein sechstes Halbfertigteil (I6) mit geprägten Löchern (10, 15, 14) und zwei Stifte (16) zu erhalten, die im mittleren Abschnitt (11) der Scheibe auskragen, und
g) Extrudieren des mittleren Schaftes (20) des sechsten Halbfertigteils (I6), um die Endform des Schwungrades (100) zu erhalten, umfassend eine mittlere Nabe (2), die aus der Extrusion des mittleren Schaftes (20) der Scheibe erhalten ist,
**dadurch gekennzeichnet, dass**
die Scheibe (1) des ersten Halbfertigteils (11) zwei gegenüberliegende, lineare Ränder (17) umfasst,
die beiden Auskragungen (4) des zweiten Halbfertigteils (I2) an den gegenüberliegenden, linearen Rändern (17) der Scheibe (1) des ersten Halbfertigteils (11) angeordnet sind und
der Schritt des Extrudierens (f) ferner ein Prägen des mittleren Loches (10), erster Löcher (15) und zweiter Löcher des fünften Halbfertigteils (I5) vorsieht.

2. Verfahren nach Anspruch 1, wobei die Schritte (a) bis (f) sequentiell jeweils mittels sechs Stationen (S1, S2, S3, S4, S5, S6) einer Transferpresse (P1) ausgeführt werden, während der Schritt (g) mittels einer zweiten, von der Transferpresse getrennten Presse (P2) ausgeführt wird.

3. Verfahren nach Anspruch 2, wobei der Schritt (g) des Extrudierens des mittleren Schaftes mittels der zweiten Presse (P2) ausgeführt wird, die eine Matrize (8) und einen spitzbogenförmigen Stempel umfasst.

4. Verfahren nach Anspruch 3, ferner umfassend den Schritt des Polierens des Spitzbogens des Stempels der zweiten Presse nach jeweils zwei von der zweiten Presse (P2) bearbeiteten Teilen.

5. Verfahren nach Anspruch 3 oder 4, wobei der Schritt (g) des Extrudierens des mittleren Schaftes das Einführen von Schmieröl in eine Kammer (80) der Matrize der zweiten Presse (P2) vorsieht.

6. Verfahren nach einem der vorstehenden Ansprüche, wobei der Schritt (d) des Formens des peripheren Randes (3) der Scheibe ferner das Formen eines gekrümmten Verbindungsabschnitts (13) zwischen dem Zwischenabschnitt (12) und dem peripheren Abschnitt (13) der Scheibe vorsieht.

7. Verfahren nach einem der vorstehenden Ansprüche, wobei der Schritt (d) des Formens des peripheren Randes (3) der Scheibe ferner das Formen der oberen Oberfläche der beiden Auskragungen (4) des peripheren Abschnitts (13) der Scheibe vorsieht.

8. Verfahren nach einem der vorstehenden Ansprüche, wobei wenigstens einer der Schritte (b, c, d, e, f) das Auftragen von Schmieröl auf das in Bearbeitung befindliche Teil vorsieht.

9. Verfahren nach einem der Ansprüche 2 bis 8, wobei die dritte Station (S3) und die vierte Station (S4) der Transferpresse in wenigstens eine Haltestation (T1, T2) eingefügt ist, in der das aus der dritten Station (S3) auslaufende Teil (I3) keine Verformung erfährt.

## Revendications

1. Processus pour la production d'un volant (100) comprenant les étapes suivantes :
a) tranchage et perçage d'une pièce métallique (L) de manière à obtenir une première pièce semi-usinée (11) constituée d'un disque (1) ayant un perçage central (10) et une pluralité de premiers trous (15) disposés à intervalles équidistants le long d'une circonférence,
b) préformage du disque (1) de la première pièce semi-usinée (I1) de manière à obtenir une deuxième pièce semi-usinée (I2) ayant une portion centrale (11) plate autour de l'orifice central (10), une portion intermédiaire (12) plate rehaussée par rapport à la portion centrale (11), une portion périphérique (13) abaissée par rapport à la portion intermédiaire (12), deux saillies (4) disposées en positions diamétralement opposées dans ladite portion périphérique (13), un bord périphérique (3) de forme tronconique qui déborde de la portion périphérique (13), où lesdits premiers trous (15) se trouvent dans la portion intermédiaire (12),
c) préformage de la portion centrale (11) de la deuxième pièce semi-usinée (I2) de manière à obtenir une troisième pièce semi-usinée (I3) ayant une tige cylindrique (20) dans la portion centrale (11) autour de l'orifice central,
d) formage du bord périphérique (3) du disque de la troisième pièce semi-usinée (I3) de manière à obtenir une quatrième pièce semi-usinée (I4) ayant le bord périphérique (3) de forme cylindrique,
e) perçage du disque de la quatrième pièce semi-usinée (I4) de manière à obtenir une cinquième pièce semi-usinée (I5) ayant une pluralité de seconds trous (14) disposés à intervalles équidistants le long d'une circonférence dans ladite portion centrale (11) du disque,
f) extrusion de deux goupilles (16) dans la portion centrale (11) du disque (1), de manière à obtenir une sixième pièce semi-usinée (I6) avec les trous (10, 15, 14) estampés et deux goupilles (16) qui débordent dans la portion centrale (11) du disque, et
g) extrusion de ladite tige centrale (20) de la sixième pièce semi-usinée (I6), de manière à obtenir la pièce finie du volant (100) comprenant un moyeu central (2) obtenu par l'extrusion de ladite tige centrale (20) du disque
**caractérisé en ce que**
ledit disque (1) de la première pièce semi-usinée (11) comprend deux bords opposés linéaires (17),
les deux saillies (4) de la deuxième pièce semi-usinée (I2) sont disposées en correspondance des dits bords opposés linéaires (17) du disque (1) de la première pièce semi-usinée (I1), et
ladite étape d'extrusion (f) prévoit également l'estampage du ledit orifice central (10), des premiers trous (15) et des seconds trous de ladite cinquième pièce semi-usinée (I5).

2. Processus selon la revendication 1, où les étapes de (a) à (f) sont réalisées en séquence respectivement moyennant six postes (S1, S2, S3, S4, S5, S6) d'une presse transfert (P1) et l'étape (g) est réalisée moyennant une seconde presse (P2) séparée de la presse transfert.

3. Processus selon la revendication 2, où ladite étape (g) d'extrusion de la tige centrale est effectuée moyennant la seconde presse (P2) qui comprend une matrice (8) et un poinçon en forme d'ogive.

4. Processus selon la revendication 3, comprenant également l'étape de polissage de l'ogive du poinçon de ladite seconde presse toutes les deux pièces usinées par ladite seconde presse (P2).

5. Processus selon la revendication 3 ou 4, où ladite étape (g) d'extrusion de la tige centrale prévoit l'introduction d'huile de lubrification dans une chambre (80) de ladite matrice de la seconde presse (P2).

6. Processus selon l'une quelconque des revendications précédentes, où ladite étape (d) de formage du bord périphérique (3) du disque prévoit également le formage d'une portion de raccord coudée (13) entre la portion intermédiaire (12) et la portion périphérique (13) du disque.

7. Processus selon l'une quelconque des revendications précédentes, où ladite étape (d) de formage du bord périphérique (3) du disque prévoit également le formage de la surface supérieure des dites deux saillies (4) de la portion périphérique du disque.

8. Processus selon l'une quelconque des revendications précédentes, où au moins une parmi les dites étapes (b, c, d, e, f) prévoit l'introduction d'huile de lubrification sur la pièce en usinage.

9. Processus selon l'une quelconque des revendications de 2 à 8, où au moins un poste d'arrêt (T1, T2) est inséré entre le troisième poste (S3) et le quatrième poste (S4) de la presse transfert, où la pièce (I3) en sortie du troisième poste (S3) ne subit aucune déformation.
